# EUROPEAN PATENT APPLICATION

(11) **EP 1 496 567 A1**
(43) Date of publication of application: **12.01.2005**
(21) Application number: 03015778.8
(22) Date of filing: 10.07.2003
(51) Int. Cl.: H01Q 3/26, H04B 17/00, H04B 7/04

(54) **Arrangement for calibrating transmission and/or reception of signals in a radio communications system**

(71) Applicant: SIEMENS AKTIENGESELLSCHAFT, 80333 München (DE)
(72) Inventor: Schieblich, Christian, Dr., 89081 Ulm (DE)

(57) **Abstract**

According to one aspect of the invention, an arrangement for calibrating transmission and/or reception of signals in a radio communications system is realised, the arrangement comprising transceiving means (TX,RX) each connected to one of an array of antenna elements (#1...#n), a coupling network (CN) arranged between the transceiving means (TX,RX) and the antenna elements (#1...#n), and connected to calibration transmitting and/or receiving means (TXc,RXc) for feeding test signals to and/or receiving the test signals from the coupling network (CN), a calibration processor for determining variations of the test signals in the transceiving means (TX,RX), and a beamforming processor for taking into account the determined variations for beamforming and/or determination of direction of arrival of respectively transmitted or received radio signals by the antenna elements (#1...#n).

## Description

### Field of the invention

The invention relates to an apparatus and a method for controlling transmission and/or reception of signals in a radio communication system, especially for application in base stations of mobile radio communications systems.

### Background of the invention

In radio communications systems, signals are exchanged between radio terminals and base stations via a so called radio interface or air interface. Radio terminals are in general mobile or stationary user terminals (UE - user equipments), whereas base stations (NB - Node B) are access stations associated with a land based communication network. Examples of known radio communication systems are second generation digital mobile radio communications systems like GSM (Global System for Mobile Communication) based on TDMA (Time Division Multiple Access) and providing data rates up to 100 kbit/s, and third generation digital mobile radio communications systems like UMTS (Universal Mobile Telecommunication System) based on CDMA (Code Division Multiple Access) with data rates up to 2 Mbit/s.

Antenna arrays can be used in any type of system that transmits and/or receives radio frequency signals using an antenna or a plurality of antennas. The use of antenna arrays in above described systems provides for antenna performance improvements over the use of a single element antenna, including improved directionality, signal to noise ratio and interference rejection for received signals, as well as improved directionality, security, and reduced power requirements for transmitted signals. Antenna arrays can be used for signal reception only, for signal transmission only, or for both signal reception and transmission. Most antenna array systems consist of an antenna array and a signal processor that processes the signals going to and coming from individual array elements.

Thus, an antenna array is composed of a number of so called antenna elements, each connected to a radio frequency (RF) transceiver (transmitter/receiver). In reception mode, the receivers obtain RF signals from each antenna element and apply a down conversion of the received signals to base band signals. In the base band, demodulated signals are then compared with each other in amplitude and phase. The information on the direction of arrival (DOA) of the incoming signal, i.e. the direction of the transmitting station, is contained in the relationship between the received signals. In transmission mode, this information is subsequently used for beamforming (BF) in the direction of the received signal by correctly weighting base band signals for the different transmitters connected to the antenna elements.

The procedure described above can only be realised with a certain accuracy if the characteristics of the transmitters and receivers are known, so that these characteristics can be taken into account for the DOA and BF algorithms. To be precise, transfer functions (in amplitude and phase) from antenna elements to the base band outputs of the receivers as well as transfer functions from the base band inputs of the transmitters to the antenna elements must be known. During operation these transfer functions are subject to parameter variations (drift) of active and passive elements in the transceivers and cables. Therefore, transfer functions have to be continuously or at least periodically determined during operation of the transceivers.

Two different approaches of calibration procedures are known in the art. According to a first procedure, a known signal is fed to a test antenna (calibration antenna) which is arranged close to or as part of the antenna array (known from prior art document US-A-6236839) or is separated from the antenna array (known from prior art document US-A-5546090). The base band signals carry information about the transfer functions of the individual receiver paths, which can then be compared and adjusted. This procedure is called RX calibration.

According to a second procedure, known signals are fed to the individual antenna elements and received by a test antenna. The test antenna could thereby be located as described above. The received signals carry the information about the individual transfer functions of the transmitter paths, which are subsequently compared and adjusted. This procedure is called TX calibration.

Both calibration procedures can be realised either simultaneously, which is a preferred solution in systems using frequency division duplex (FDD), or consecutively as preferred in systems using time division duplex (TDD).

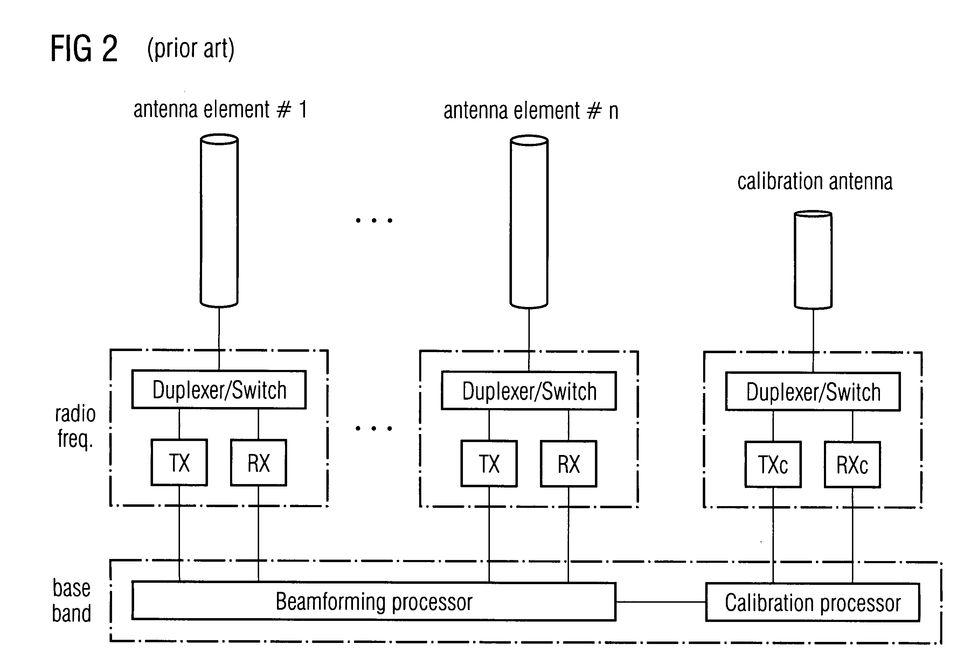

A configuration enabling the above described procedures is shown in FIG 2. According to this configuration, a calibration antenna is connected by means of a duplexer or switch to transmitter (TX) and receiver (RX) circuits operating in the radio frequency range. Signals from/to the calibration antenna are processed in a calibration processor operating in the base band. The calibraton processor is connected to a beamforming processor that processes signals from/to the individual antenna elements (#1...#n) of an antenna array of e.g. a base station.

In a RX calibration procedure, the calibration processor initiates the transmission of test signals from the calibration antenna over the air interface to the antenna elements of the antenna array. The received test signals are then fed back to the calibration processor by means of the beamforming processor. Within the calibration processor, transfer functions of the individual receiver paths are determined and evaluated in order to be taken into account for normal operation of determining directions of arrival.

In a TX calibration procedure, the calibration processor initiates the transmission of test signals from each of the antenna elements which are received by the calibration antenna. The received signals containing information about the transfer functions of the individual transmitter paths are then evaluated in the calibration processor and taken into account for the normal operation of beamforming.

The described procedures suffer from the fact that calibration is done based upon the transmission of signals over the air interface. This makes it sensitive to interfering sources like reflecting walls, trees, birds, etc. Furthermore, in cases where the antenna array has no rotational symmetry, it is not possible to locate the calibration antenna in the center of the antenna array, as shown in US-A-6236839. Likewise, arranging the calibration antenna remote from the antenna array, as shown in US-A-5546090, is often not feasible at the antenna site, and is even more affected by interfering sources.

It is therefore an object of the invention to provide calibration arrangements which do no suffer from the above stated disadvantages. This object is addressed by the arrangement and method according to the features of the independent claims.

### Statement of the invention

According to a first aspect of the invention, an arrangement and a method for controlling transmission and/or reception of signals in a radio communication system is provided. The arrangement thereby consists of a coupling network which is arranged between transceiving means and antenna elements for feeding test signals to the coupling network and/or receiving the test signals from the coupling network. The arrangement furthermore consists of a calibration processor for determining variations of the test signals in the transceiving means, and a beamforming processor for taking into account the determined variations for beamforming and/or determination of direction of arrival of respectively transmitted or received radio signals by the antenna elements.

The usage of a coupling network for the exchange of test signals between transceiving means and calibration means prevents interfering signals from disturbing the calibration process. Furthermore, by using connections with equal lengths between these components in the coupling network, from the calibration means all transceiving means are equidistant from each other.

### Brief description of the figures

The invention may be understood more readily, and various other aspects and features of the invention may become apparent from consideration of the following description and the figures as shown in the accompanying drawing sheets, wherein:
- FIG 1: shows a block diagram of a radio communication network,
- FIG 2: Shows an arrangement known in the art,
- FIG 3: shows an arrangement according to the invention,
- FIG 4: shows an arrangement of coupling means and a power combiner,
- FIG 5: shows details of the coupling means, and
- FIG 6: shows details of alternative coupling means.

### Detailed description of the invention

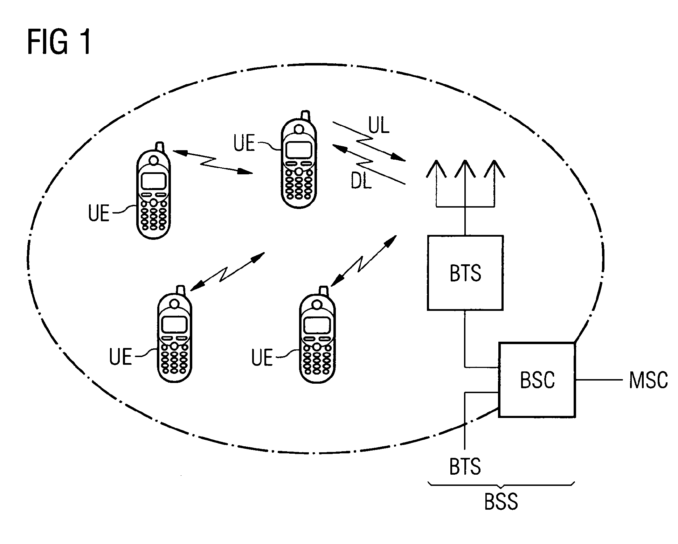

FIG 1 shows the basic structure of a mobile radio communications system, e.g. a GSM system. The system consists of a central mobile switching center MSC which is connected to the public switched telephone network PSTN and other MSCs. Connected to a MSC are a plurality of base station controllers BSC, which inter alia coordinate the sharing of the radio resources provided by base stations BTS (Base Transceiver Station). Base stations BTS transmit in downlink DL and receive in uplink UL signals respectively to or from user equipments UE situated within the area covered by the base station BTS. In FIG 1 the base station comprises an antenna array consisting of a number of antenna elements. The antenna array, also called a smart antenna, is used for beamforming of signals transmitted to individual user equiments in order to reduce interference caused to signal transmissions of parallel connections.

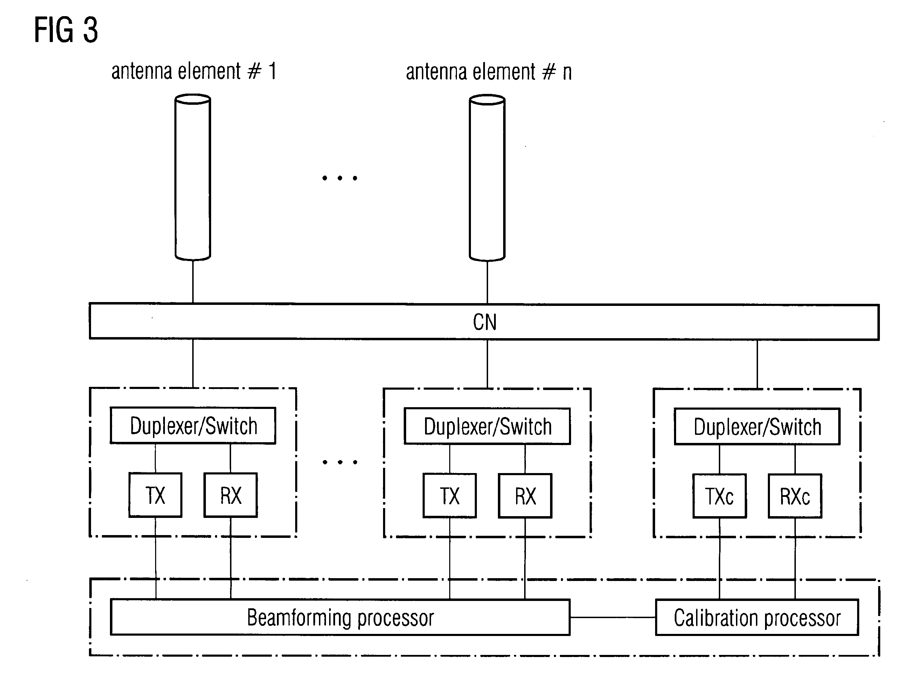

An arrangement according to the invention as shown in FIG 3 is based on the structure of FIG 2 described above. In contrast to arrangements known in the art, a coupling network or calibration network CN is arranged between a plurality of transceiving means TX, RX and individual antenna elements #1...#n, and connected to calibration transmitting and/or receiving means TXc, RXc. The use of a coupling network instead of calibration antennas prevents signals, for example test signals, used for calibration procedures from being disturbed by interference, reflections etc., thereby enabling a more reliable calibration procedure than in arrangements known in the art. In advantageous configurations, the coupling network is arranged respectively close to the antenna array or even as part of the antenna array.

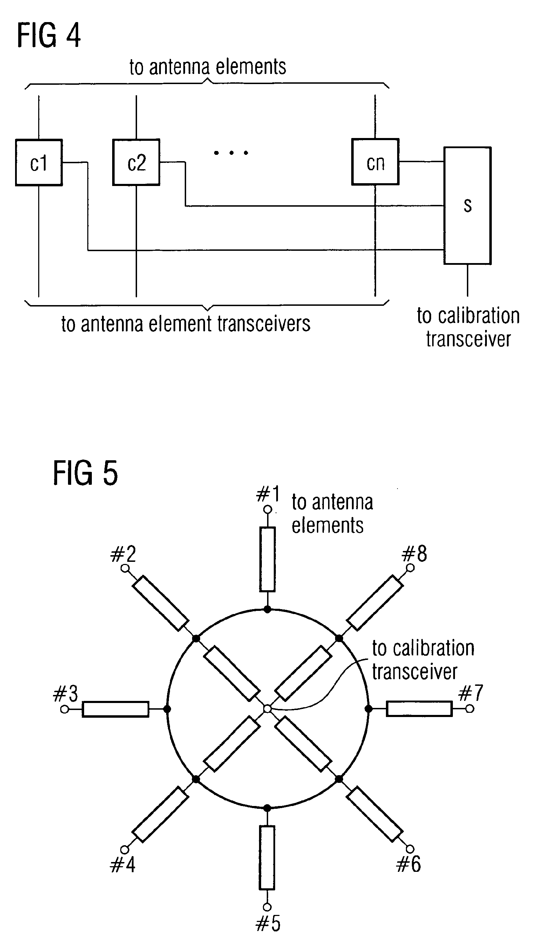

The coupling network according to FIG 4 consists of coupling means c1...cn that are arranged between individual antenna elements #1...#n and corresponding transceiving means TX, RX. Signals coupled to/from the signal paths between antenna elements and transceiving means are combined in a power combiner S connected to the calibration transmitting and/or receiving means. The coupling means can for example be realised as coupling capacitors or directional couplers, wherein the former have the advantage of being compact and inexpensive, whereas the latter provides suppression signals reflected from the antenna elements.

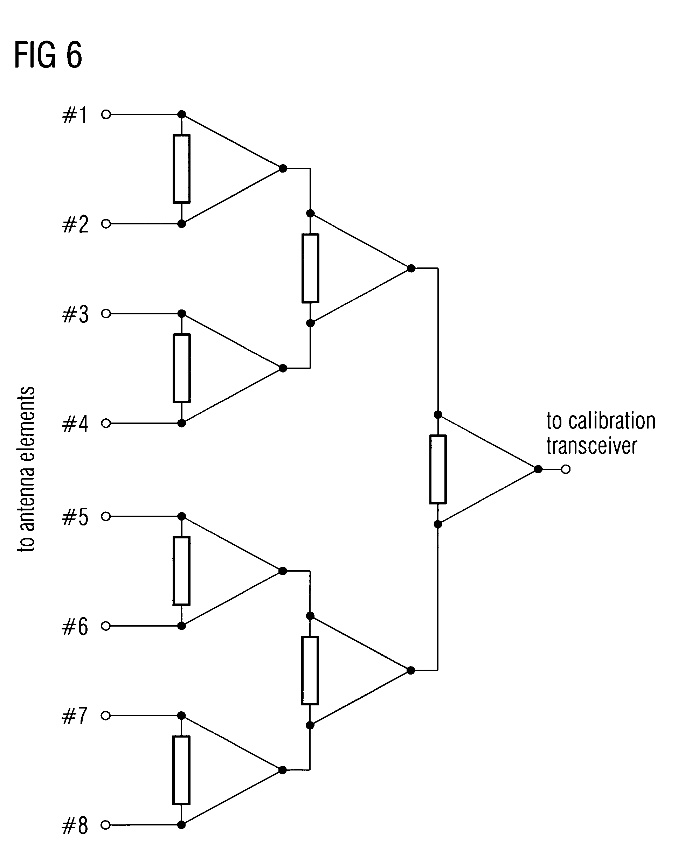

According to FIG 5 or 6, the combiner S can be realised as a resistive divider (FIG 5) or a tree of Wilkinson power dividers (FIG 6), wherein the former is more compact and the latter provides a better decoupling of the individual ports/antenna elements. In these given examples, the provision of eight respectively antenna elements or ports #1...#8 is assumed.

In the following, RX and TX calibration procedures are described using the described arrangement according to the invention. These procedures can be realised continually or periodically during operation of the transceivers.

In a RX calibration procedure, i.e. calibration of the receiving paths of the transceivers, the calibration processor or an individual source generates test signals in the base band, which are converted into radio frequency band signals by a calibration transmitter TXc and fed to the coupling network. The test signals are then coupled into the receiving means RX by means of the coupling means c1...cn and downconverted into base band signals again. The beamforming processor connected to the transceiving means provides the received signals that contain information about transfer functions of the individual signal paths to the calibration processor, in which the differences in receiver characteristics are determined. Informations about the determined differences are then fed back to the beamforming processor in order to be taken into account for normal operation of determining directions of arrival of radio signals from user equipments in communication with the base station. As differences, e.g. maxima of phase and amplitude differences of coupling coefficients are determined by the calibration processor

In a TX calibration procedure, i.e. the calibration of the transmitting paths of the transceivers, the calibration processor or an individual source generates base band test signals that are fed to the transmitting means TX of the transceivers via the beamforming processor. The test signals are upconverted into radio frequency band signals by the transmitting means TX and coupled into the coupling network CN by the coupling means c1...cn. From the coupling network CN, the test signals that contain information about the transfer functions of the individual transmitter paths are received by the calibration receiving means RXc and downconverted into base band signals. From these received test signals, the calibration processor determines differences in transmitter characteristics and respectively feeds this information back to the beamforming processor or controls the beamforming processor so that these differences are taken into account for the normal operation of beamforming of communication signals for user equipments.

Because the calibration receiving means RXc are generally configured to receive test signals from only one transmitting mean TX at a time, the calibration processor controls the transmitting means TX in that test signals are coupled consecutively into the coupling network in order to separate the received signals from the individual transmitting means TX in time.

## Claims

1. Arrangement for controlling transmission and/or reception of signals in a radio communications system, comprising transceiving means (TX,RX) each connected to one of an array of antenna elements (#1...#n),
a coupling network (CN) arranged between the transceiving means (TX,RX) and the antenna elements (#1...#n) and connected to calibration transmitting and/or receiving means (TXc,RXc) for feeding test signals to and/or receiving test signals from the coupling network (CN),
a calibration processor for determining variations of the test signals in the transceiving means (TX, RX), and
a beamforming processor for taking into account the determined variations for beamforming and/or determination of direction of arrival of respectively transmitted or received radio signals by the antenna elements (#1...#n).

2. Arrangement according to claim 1, wherein
the coupling network (CN) is arranged close to the array of antenna elements (#1...#n) or is part of the array of antenna elements (#1...#n).

3. Arrangement according to claim 1 or 2, wherein
the coupling network (CN) consists of coupling means (c1...cn), arranged between the individual antenna elements (#1...#n) and transceiving means (TX, RX), and a power combiner (S) connected to the calibration transmitting and/or receiving means (TXc, RXc).

4. Arrangement according to claim 3, wherein
the combiner (S) consists of coupling capacitors, arranged as resistive dividers.

5. Arrangement according to claim 3, wherein
the combiner (S) consists of directional couplers, arranged as a Wilkinson divider.

6. Arrangement according to one of the preceding claims, wherein
the test signals are generated in the calibration processor.

7. Base station (BS) of a radio communication system, with an arrangement according to any preceding claim.

8. Method for controlling transmission and/or reception of signals in a radio communication apparatus (BS), the radio communication apparatus (BS) comprising transceiving means
(TX, RX) each connected to one of an array of antenna elements (#1...#n), wherein
test signals are generated and fed to a coupling network (CN) arranged between the transceiving means (TX, RX) and the antenna elements (#1...#n), the coupling network (CN) being connected to calibration transmitting and/or receiving means (TXc, RXc) for feeding the test signals to and/or receiving the test signals from the coupling network (CN),
variations of the test signals in the transceiving means (TX, RX) are determined in a calibration processor, and
the determined variations are taken into account for beamforming and/or determination of direction of arrival of respectively transmitted or received radio signals by the antenna elements (#1...#n).

9. Method according to claim 8, wherein
the test signals are fed to the transmitting means (TX) via a beamforming processor and received by the calibration receiver via the coupling network (CN),
the calibration processor determines variations between the individual signal paths of the transmitting means (TX), and
the calibration processor feeds back the variations to the beamforming processor.

10. Method according to claim 8 or 9, wherein
the test signals are fed to the calibration transmitter (TX) and received by the receiver means (RX) via the coupling network (CN),
the test signals are fed to the calibration processor via a beamforming processor, and
the calibration processor determines variations between the individual signal paths of the receiving means (TX) and feeds back the determined variations to the beamforming processor.

11. Method according to one of the preceding claims 8 to 10, wherein
transfer functions of the transmitting and/or receiving paths are determined in the calibration processor.

12. Method according to one of the preceding claims 8 to 11, wherein
the calibration processor determines a maximum of a phase and amplitude difference of a coupling coefficient.
